# EUROPEAN PATENT SPECIFICATION

(11) **EP 4 344 761 B1**
(45) Date of publication and mention of the grant of the patent: **31.07.2024**
(21) Application number: 22382912.8
(22) Date of filing: 30.09.2022
(51) Int. Cl.: B01D 24/16, B01D 24/30, B01D 24/46, B01D 24/48

(54) **WASHING DEVICE FOR FILTER MEDIA IN CONTINOUS BACKWASH SAND FILTERS AND METHOD OF USE**
WASCHVORRICHTUNG FÜR FILTERMEDIEN IN KONTINUIERLICHEN RÜCKSPÜLSANDFILTERN UND VERFAHREN ZUR VERWENDUNG
DISPOSITIF DE LAVAGE POUR MILIEUX FILTRANTS DANS DES FILTRES À SABLE À LAVAGE À CONTRE-COURANT CONTINU ET PROCÉDÉ D'UTILISATION

(43) Date of publication of application: 03.04.2024
(73) Proprietor: FCC Aqualia, S.A., 28050 Madrid (ES)
(72) Inventor: LARA CORONA, Enrique, 41003 Sevilla (ES); ARBIB, Zouhayr, 29649 Mijas (Málaga) (ES)
(74) Representative: Ungria López, Javier

(56) References cited:
- CN-A- 109 621 503
- JP-A- H08 196 819
- US-A- 4 126 546
- US-A1- 2011 168 615

## Description

### FIELD OF THE INVENTION

This invention relates to the treatment of water and wastewater, specifically to sand filters and more particularly to continuous backwash sand filters (CBS filters). The present invention relates to a device for washing the filter medium used in continuous washing filters with upward flow (backwash).

### BACKGROUND OF THE INVENTION

Continuous backwash sand (CBS) filters are essentially used for the treatment of polluted water, with the aim of removing colloids, suspended solids and organic matter from the drinking water and tertiary treatment of wastewater.

In a common CBS filter of the prior art, such as the one described in Patent US4126546 and the one shown in Figure 1 of the present document, the polluted water is injected to the bottom of the filter medium (which is a sand filter) through an influent pipe and a downwards water distributor, and after crossing the filter medium upflow, passes through a filtered water (also named in this document as "treated water") zone and exits the filter by an overflow weir and effluent pipe.

During all this process for treating the water by filtration the filter medium that is inside the CBS filter is washed continuously by means of a device configured to that aim. In a CBS filter of the prior art as the one disclosed in patent US4126546 (see also Figure 1 of the present document), the sand washer device consists of an air-lift pump and a vertical riser pipe that cross the CBS filter from the bottom to the top, activated by compressed air pipe that takes the sand with impurities from the bottom of the filter and sends it to the sand washer device located at the upper part, above the filter medium. The sand washer device puts the polluted sand in contact with a portion of the treated water flow (such portion flow named at this stage as "washing water") and creates two currents: a current of the washing water that drags the impurities from the sand, which is evacuated from the CBS filter by an effluent pipe as reject water; and another current of the sand already cleaned, which is returned to the filter medium.

The sand washer device is the key part of a CBS filter, as it ensures that the filter medium is in optimal conditions without accumulating impurities. As it is a continuous washing system, a CBS filter does not need to interrupt filtration to carry out the cleaning of the filter medium, unlike the case of traditional pressure sand filters. In this way, with a single CBS filter it is possible to supply water continuously without the need to install two filters in parallel. On some occasions, to achieve energy savings, washing water in a CBS filter can be done discontinuously, although without interrupting the filtration process.

In a CBS filter, given a certain flow of water to be filtered, there are only two variables that can be acted upon:
- Compressed air flow rate of the air-lift pump, which is the driving force of the pump and acts over the pumping flow rate of water-sand-impurities, and which can be modified by means of a manual valve.
- Flow rate of washing water that is modified by a manual gate, which maintains a level difference between the sand washer device and the treated/filtered water overflow weir. This level difference causes a continuous entry of a portion of the treated water flow into the sand washer device, and allows the sand to be washed, such portion of the treated water flow named as washing water. The washing water flow rate is usually between 3-8% of the treated water flow.

In a CBS filter, both the compressed air flow rate and the washing water flow rate are kept constant at pre-established values, without the possibility of being controlled during operation thus causing certain problems:
1) Reduction in washing efficiency and blockages of the air-lift pump whenever there are contamination peaks: The water to be treated in the filter often has significant variability in terms of contamination characteristics, which also causes variable fouling of the filter medium. In the washer means of a CBS filter, the compressed air flow rate in the air-lift pump is kept constant by means of a manual valve, and therefore the pumping flow of the water-impurities-sand mixture is also constant, whereas the relative mix ratio may vary. When there is a high presence of impurities, mainly formed by suspension solids, the flow of sand is reduced and therefore the efficiency of the washing, and can even be completely blocked.
2) High rate of compressed air flow in the air-lift pump and associated energy. The problem described in the previous section is sometimes solved in conventional filters by supplying the air-lift pump with high flows of compressed air calculated to pump a sufficient flow of sand in the most unfavorable conditions of contamination. This solution is energetically unsustainable and does not completely prevent pump blockages either.
3) Excessive rate of washing water flow. When the contamination of the incoming water is higher, the amount of suspended solids and impurities contained in the sand pumped with the air-lift also increases, so a greater flow of washing water is needed. In the CBS filter, the washing water flow is fixed at a constant value and dimensioned for the conditions of greatest contamination, so that an excessive washing water flow is rejected.

In addition to the above problems, derived from the inability to control during operation the two only variables of the process, CBS filters present a common problem of air-lift blockages and reduction in the quality of the treated water during start-ups. When the filter stops, the sand-water-impurities flow that remains inside the air-lift pump tends to clump together, causing a blockage in the pipe. When a pressurized air flow is injected to start the pumping, this plug prevents the ascent of the air and therefore the pumping, so that the air tends to descend instead of ascending, shaking the filter medium around the air-lift pump, and causing the retained impurities to reach the already treated water located in the upper part.

JP H08 196819 A discloses a washing device comprising at the exit of the sand washer device a filter media movement detection device with an impeller, which rotates when washed sand falls on the blades of the impeller and a sensor that detects the rotation of the impeller. Thus the failure of the air lift action and of the cleaning in the sand washer device can be detected very early. However D1 does not disclose means for measuring the flow rate of said washed sand, D1 discloses only a flow detector.

To avoid the problems detected in the technical field of the sand filters, the present invention proposes a new CBS filter that includes improvements in the device for washing the filter medium, which substantially improves filtered water quality and reduces energy and wash water flow.

### DESCRIPTION OF THE INVENTION

The invention is set out in the appended claims 1-11. Its main objective is to achieve optimum flow of washed sand and optimum flow of water for washing the sand at all times in washing devices suitable for continuous backwash sand filters, taking into account the contamination characteristics of the water inlet. Additionally, the present invention proposes an alternative that allows the washing device, which comprises an air-lift pumping pipe, to be unblocked in the event of clogging, without reducing the efficiency of the filter. The washing device for filter media in CBS filters of the present invention comprises:
- an air-lift pump that propels a mixture of sand and water with impurities upwards from the bottom to the top of the filter medium, which is a sand filter, by injecting compressed air from
- a compressed air pipe that connects to
- an air-lift riser pipe, the mixture crossing the filter medium and a filtered water zone, up to
- a sand washer device that is located at the upper part of the CBS filter for receiving the mixture with impurities and washing the sand;
the washing device also comprising:
- means for measuring the flow rate of the sand washed, located at one exit of the sand washer device and above the upper part of the filter medium inside the CBS filter, being connected to
- a regulating valve of the compressed air injected in the air-lift pump, located at the compressed air pipe;
   and
- means for measuring the compressed air injected to the air-lift riser pipe, which is a compressed air flow-meter located in the compressed air pipe outside the CBS filter, connected to
- means for operating a driver for a gate that controls the flow of washing water that exits the filter through a washing water pipe.

The claimed device achieves the regulation of the sand pumping flow rate as well as of the washing water flow rate, that is to say, the two key parameters for an optimum washing operation. As explained in the previous section, if the flow rate of compressed air in the air-lift pump is kept constant when there is a high presence of impurities in the inlet water, the flow rate of the mixture of water and sand having impurities pumped from the bottom of the filter medium to the top of the CBS filter is reduced as well as the washing efficiency, and may even reach stop due to clogging of the air-lift pipe and cause the collapse of the system. In order for the filter medium and therefore the operation of the filter to reach and maintain the optimal conditions, it is necessary to maintain a certain flow of sand in the air-lift pump. The sand flow rate of the air-lift pump can be calculated based on the downward velocity of the sand inside the filter, since the air-lift pump sucks it from the bottom of the filter and results in a downward velocity of the sand filter. Based on experience of the inventors, the descending speed of the sand in the filter medium for optimum operating conditions should be around 3-8 mm/min, a value from which one can calculate the necessary flow of sand to be pumped. For example, in a filter with a diameter of 1400 mm and a speed of 5 mm/min, one would need a washing sand flow rate of Q=v x A= 5 x π/4 x 14002= 0.46 m³/h.

The present invention makes it possible to reach and maintain the optimum flow rate of washed sand for different contamination degrees of the inlet water, thanks to this improved system.

The means for measuring the flow rate of effectively washed sand are located at the upper part of the CBS filter, above the filter medium and specifically at one of the two exits of the washer sand device that cleans the impurities from the polluted sand (a second exit is the effluent pipe for washing water or reject water after cleaning the sand). The washed sand falls by gravity from the washer sand device to the upper part of the filter medium, being part (again) of it, and it is the amount of washed sand that falls again on the filter medium what is measured. The measurements are taken and used for regulating the valve of the pipe that injects the compressed air in the air-lift pump. In this way, if the sand flow decreases from the pre-established optimum, as occurs during an increase in the contamination of the inlet water, the regulating valve located in the compressed air pipe opens and allows a higher flow of compressed air to pass through the air-lift pump, thus achieving the pumping of a greater flow of sand with impurities and water until the optimum flow is reached. During inlet water contamination peaks, the concentration of impurities in the water-sand-impurities mixture that is pumped through the air-lift pump from the bottom to the top of the CBS filter increases, requiring a higher flow rate of washing water to guarantee adequate sand washing.

As stated in claim 1, the means for measuring the compressed air injected to the air-lift riser pipe is a compressed air flow-meter. In a preferred embodiment, the means for measuring the flow of washed sand at the exit of the washer sand device is a sand-flow meter of the tipping bucket type containing:
- two connected tipping buckets,
- connected means of the tipping buckets (28, 29),
- a pivot shaft between the two connected buckets for enabling them to tip,
- a stop for finishing each tip (tipping stop), and
- a proximity sensor to count each tip, more preferably an inductive sensor.

The sensor sends a signal from the sand-flow meter to a controller that acts on the regulating valve.

In a particular embodiment of the sand-flow meter, the connected means of the tipping buckets consists of a central compartment (28) having a cover (29), located between the two connected tipping buckets (25, 26).

The washing device does not only optimize the sand pumping flow rate, but also the washing water flow rate for washing the sand. In the system described above, the compressed air flow injected is proportional to the contamination of the inlet water. Since the compressed air flow injected by the air-lift pump is proportional to the contamination of the inlet water, means for measuring the flow in said compressed air-lift pump can act on the gate for the exit of the washing water, through a drive motor that regulates said flow. In this way, sufficient compressed air flow is guaranteed for an effective washing of the polluted sand during contamination peaks, and on the other way round an excessive flow of washing water is avoided in situations of low contamination.

Additionally, the most important problem detected in the washing water device is the clogging of the air-lift riser pipe due to an uncontrolled amount of impurities. In known continuous washing filters, it often happens that the air-lift pipe becomes clogged due to caking of the water-sand-impurity mixture during filter operation, stopping the pumping and therefore the washing of the sand. It is also common for the air-lift pipe to clog during start-up after the filter stop. In these situations, the blockage in the pipe caused that the compressed air from the air-lift pump follows a descending path instead of ascending, and exits through the lower end of said pipe towards the filter medium, and subsequently to the treated water located in the upper part. The impurities retained in the filter medium are stirred and agitated by the air, ascending and contaminating the treated water and producing a drastic reduction in filter performance.

In this invention, an improvement in the washing device for the sand filter is configured to carry out the unclogging of the air-lift pipe in the described situations, avoiding the agitation of the sand of the filter medium: the washing device disclosed above further comprises a membrane valve that is a shut-off valve, preferably, an air operated pinch valve surrounding the lower part of the air-lift riser pipe inner wall, configured to open (normal opposition) in normal operation of the CBS filter and to close when the means for measuring the washed sand flow detects that the clogging occurs, preventing the compressed air from descending. If it occurs, the air-lift regulating valve opens, and it is preferably fully opened, injecting a higher flow of compressed air and favouring the unblocking of the pipe. Finally, the membrane valve opens to continue with the normal operation of the filter.

A second object of the present invention is a CBS filter having a sand bed as filter medium that comprises the washing device for the filter medium described in the present document.

Additionally, another object of the invention is a method for cleaning the sand filter of a CBS filter by means of the washing device disclosed in the present document, said method comprising:
- collecting the washed sand that exits the sand washer device before falling on the upper sand bed, through the means for measuring the flow rate of the sand washed; and
- sending a signal, which is proportional to the sand flow collected, from the sand-flow meter to compressed-air regulating valve located in the compressed air pipe; in such a way that whenever the collected flow of sand decreases, the regulating valve opens to allow more compressed air flow to pass through the air-lift riser pipe, thus propelling a greater sand flow upwards;
   and simultaneously
- measuring the flow of compressed air injected to the air-lift riser pipe through the means for measuring said compressed air; and
- sending a signal to the means for operating the driver for the washing water regulating gate in such a way; in such a way that whenever the flow of compressed air decreases, the washing water regulating gate rises and reduces the washing water flow.

Additonally, in a particular embodiment in which the washing device detects that the air-lift riser pipe is clogged/clogging, the shut-off valve closes, and the compressed air regulating valve opens, unclogging the pipe. Simultaneously, a washing water valve closes to avoid falling the water level. Subsequently, the shut-off valve opens again and the air-compressed air valve is regulated for a normal functioning of the washing device.

### BRIEF DESCRIPTION OF THE FIGURES

Next, to facilitate a better understanding of the description of the invention and forming an integral part of it, some figures are attached in which the object of the invention has been represented by way of illustration and not limitation.

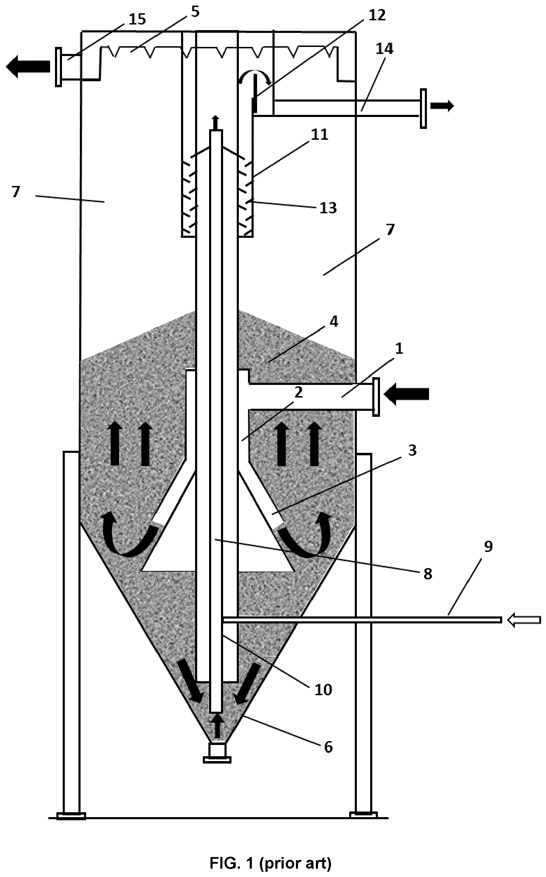

**Figure 1** **(prior art).** It shows a front view of a continuous backwash sand filter.
   (1) Influent pipe for the water to be filtered
   (2) Vertical pipe water downwards distributor for the water to be filtered
   (3) Water distributor having conical shape for the water to be filtered
   (4) Filter medium (sand filter)
   (5) Overflow weir
   (6) Bottom part of the filter having conical shape
   (7) Zone for filtered water
   (8) Air-lift pump
   (9) Compressed air pipe
   (10) Air-lift riser pipe
   (11) Sand washer device for the mixture of sand, water and impurities
   (12) Washing water gate for the water used for washing the sand
   (13) Washer device deflectors
   (14) Reject washing water pipe
   (15) Effluent pipe for the filtered water
**Figure 2** **(embodiment of the invention).** Example of a continuous backwash sand filter, according to the preferred embodiment of this invention.
   (16) Sand flow-meter
   (17) Proximity Sensor
   (18) Controller
   (19) Compressed air regulating valve
   (20) Compressed air flow-meter
   (21) Driver for the washing water gate (12)
   (22) Shut-off valve
   (23) Washing water valve
   (24) Compressed air pipe to shut-off valve (22)
**Figure 3** **(embodiment of the invention).** It represents a perspective view of the sand-flow meter (16).
   (17) Proximity sensor
   (25) (26) Tipping buckets
   (27) Pivot shaft
   (28) Central compartment
   (29) Central compartment cover
   (30) Tipping Stop
   (31) Outlet flow of washed sand coming from the washer device
**Figures 4a** **y** **4b** **(embodiment of the invention).** It represents a front view of the sand-flow meter (16) in operation mode.
   (17) Proximity sensor
   (25) (26) Tipping buckets
   (27) Pivot shaft
   (28) Central compartment
   (29) Central compartment cover
   (30) Tipping Stop
   (31) Outlet flow of washed sand coming from the washer device

### DETAILED DESCRIPTION OF THE INVENTION

A conventional continuous backwash sand (CBS) filter according to the prior art (Figure 1) has means for injecting a flow of water to be treated inside the filter, comprising an influent pipe (1) for the injection of the polluted water, which may have a radial shape and which is connected to one end of a vertical pipe (2) having two ends and centered on the filter, and which is connected at its second end to a water distributor (3). This water distributor (3) is located at the lower part of the CBS filter (6), which preferably has a conical shape, and buried inside a filter medium (4), which is a sand bed. The inlet water flow is injected at the lower part of the CBS filter (6), which is also the bottom of the filter medium (4), following an upward direction through the sand bed, leaving its impurities in said sand and exiting the filter medium (4), and passing through a zone for treated water (7) located in the upper part of the CBS filter. Finally, the filtered water overflows through a water overflow weir (5) located at the upper part of the CBS filter and is evacuated through the effluent pipe (15).

The described washing water process is carried out continuously by extracting the sand with impurities that is accumulated at the bottom part of the CBS filter (6), and returning it clean to the top of the filter medium (4). This cleaning process is carried out with a washing device that comprises a pump of the "air-lift" type (8) located inside the CBS filter, without moving parts and that only needs compressed air injected through a compressed air pipe (9) located in the lower part of an air-lift riser pipe (10) that axially crosses the CBS filter, and by extension the filter medium (4), from the bottom (6) to the top, wherein a sand washer device (11) is located. In this way, as a result of the injection of compressed air, a mixture of water (that is being filtered in the sand bed), sand and impurities is pumped from the lower part of the filter medium (4) to the sand washer device (11) located at the other end of the air-lift riser pipe (10), which puts the dirty sand in contact with cleaned water from the zone for treated water (7).

The sand washer device (11) has a washing water gate (12) that allows the filter to maintain a washing water level lower than that of the overflow weir (5). This way, a flow of treated water from the zone for treated water (7) enters the sand washer device (11) due to a difference in level and comes into counterflow contact with the dirty sand through a series of inclined deflectors (13) arranged in a zigzag pattern, dragging the impurities and producing washing water that is polluted and evacuated though a reject washing water pipe (14), while the sand already cleaned is returned to the filter medium (4) by gravity by an exit of the sand washer device (11).

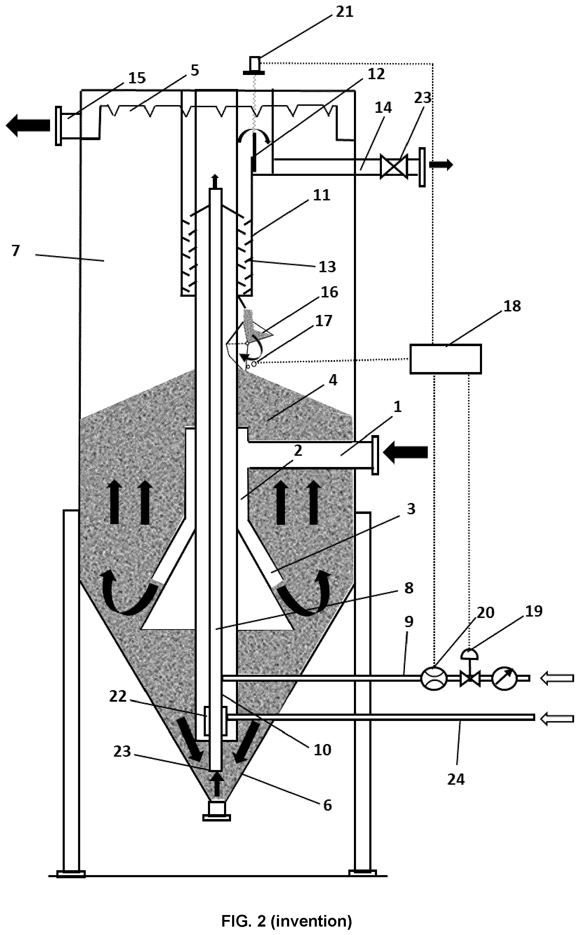

Apart from these elements, (see Figure 2) the preferred sand washer device (11) of the present invention further comprises a sand-flow meter (16), that is located below a lower exit of the sand washer device (11). The sand flow-meter (16) collects the washed sand before it falls from the washer device (11) on the upper sand bed (4). Thanks to a proximity sensor (17) located in the sand washer device (11) a signal which is proportional to the sand flow collected is sent to a controller (18) that acts on a regulating valve (19) located in the compressed air pipe (9). In this way, if the sand flow collected decreases from the (pre-established) optimum, as occurs in an increase in the contamination of the inlet water, the regulating valve (19) opens to allow more air flow to pass, thus allowing the propelling of a greater sand flow upwards, and subsequently restoring the target value.

At the same time, (Figure 2) to optimize the flow of water used for cleaning the dirty sand, a compressed air flow-meter (20) located at the pipe (9) measures the flow of compressed air and sends a signal to the controller (18), said controller acting on a driver (21) that controls the position of the gate (12) that let the washed water exit, which is a driver motor that regulates the position of the washed water gate (12). In this way the flow of water for washing the filter medium can be increased if the contamination of the inlet water increases, maintaining an effective sand washing.

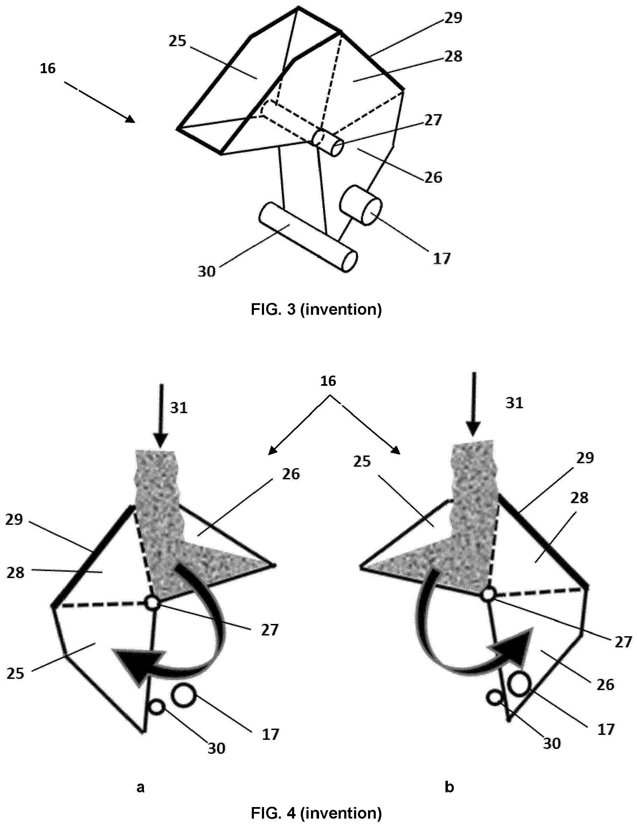

A perspective view of a preferred sand flow-meter (16) is shown in Fig. 3. It is a flow meter of the tipping bucket type containing:
- two identical connected tipping buckets (25, 26),
- a central compartment (28) to connect the tipping buckets (25, 26) with a cover (28) to avoid the entrance of sand,
- a pivot point (27) between the buckets to enable them to tip,
- a stop to finish each tip (30) and
- a proximity sensor (17) to record each tip, more preferably an inductive type sensor.

The proximity sensor (17) sends a signal from the sand-flow meter (16) to a controller that acts on the compressed air regulating valve (19).

Figures 4a and 4b show the operation of the described sand flow-meter of the present invention. The flow of sand already washed (31) exits the sand washer device (11) and falls by gravity towards one of the two tipping buckets (25, 26) having an upper opening, as seen in figure 4a. Once the flow of sand already washed (31) reaches a certain weight, the entire sand flow-meter (16) tips clockwise up to the stop (30). The cleaned sand exits the bucket (25, 26) and falls to the filter medium (4). As this happens, the second symmetrical bucket (25, 26) is lifted and starts to fill with the sand falling from the sand washer device (11) as shown in figure 4b, until the weight of sand makes the sand flow-meter (16) tip again, this time counterclockwise, passing in front of the proximity sensor (17) and reaching the tipping stop (30) again. The process of filling and tipping will continue as the washed sand (31) falls from the washer device (11). Knowing the volume of each compartment and the number of times per unit of time that the proximity sensor (17) detects the presence of the bucket (26), it is possible to calculate and record electronically the flow rate of the sand that is washed.

In prior art continuous washing filters, it often happens that the air-lift riser pipe (10) gets clogged due to caking of the water-sand-impurity mixture during filter operation, stopping the pumping of the air-lift pump (8), and therefore stopping the washing of the polluted sand. It is also common for pipe (10) to clog during start-up after a filter stop.

In the present disclosure (Figure 2), the sand flow-meter (16) detects the clogging situation and starts a procedure to unclog the air-lift riser pipe (10). In a first step, the controller (18) closes the compressed air regulating valve (19) after receiving the signal from the sand washer device to avoid that, due to clogging, the compressed air, instead of ascending through the air-lift riser pipe (10), descends and ends up exiting through the lower end towards the filter medium (4), shaking it and causing the evacuation of impurities to the filtered water (7) located in the upper part of the filter, and therefore reducing the yields of the process. Parallel to the closing of the compressed air regulating valve (19), the washing water valve (23) located at the reject washing water pipe (14) is closed to prevent the filter from emptying up to the overflow level of the gate (12) of washing water

The shut-off valve (22), preferably, an air operated pinch valve suitable for operation with abrasive grains such as sand is closed by compressed air, supplied through a second independent air pipe (24). When the shut-off valve (22) is closed, the compressed air injected through the other compressed air pipe (9) is prevented from descending through the air-lift riser pipe (10) and from exiting through its lower end towards the filter bed (4). Subsequently, the regulating valve (19) is opened to the maximum to allow the compressed air injected through said pipe (9) to unclog the air-lift riser pipe (10). Finally, the shut-off valve (22) and the washing water valve (23) open, starting the normal operation of the filter.

## Claims

1. A washing device for filter media in Continuous Backwash Sand (CBS) filters wherein the filter medium (4) is a sand filter, comprising:
- an air-lift pump (8) that propels a mixture of sand and water with impurities upwards from the bottom to the top of the filter medium (4), by injecting compressed air from
- a compressed air pipe (9) that connects to
- an air-lift riser pipe (10), the mixture crossing the filter medium (4) and a filtered water zone (7), up to
- a sand washer device (11) that is located at the upper part of the CBS filter for receiving the mixture and washing the impurities from the sand with the washing water;
- means (16) for measuring the flow rate of the sand washed, located at one exit of the sand washer device (11) and above the upper part of the filter medium (4) inside the CBS filter, being connected to
- a regulating valve (19) of the compressed air injected in the air-lift pump (8), located at the compressed air pipe (9);
and
- means (20) for measuring the compressed air injected to the air-lift riser pipe (10), which is a compressed air flow-meter located in the compressed air pipe (9) outside the CBS filter, connected to
- means (21) for operating a driver for a gate (12) that controls the flow of washing water that exits the CBS filter through a washing water pipe (14).

2. The washing device for filter media according to claim 1, wherein the means (16) for measuring the flow of washed sand (31) at the exit of the washer sand device (11) is a sand-flow meter (16) of the tipping bucket type containing:
- two connected tipping buckets (25, 26),
- connected means of the tipping buckets (28, 29)
- a pivot shaft (27) between the two buckets (25, 26) for enabling them to tip,
- a tipping stop (30) for finishing each tip, and
- a proximity sensor (17) to count each tip.

3. The washing device for filter media according to claim 2, wherein the connected means of the tipping buckets consists of a central compartment (28) having a cover (29), located between the two connected tipping buckets (25, 26).

4. The washing device for filter media according to any one of claims 2 or 3, wherein the proximity sensor (17) is an inductive sensor.

5. The washing device for filter media according to any one of claims 2 to 4, wherein it comprises a controller (18) for receiving signals from the proximity sensor (17) of the sand-flow meter (16), which acts on the regulating valve (19) for the compressed air.

6. The washing device for filter media according to any one of claims 1 to 5, wherein the gate (12) that controls the flow of washing water that exits the CBS filter through a washing water pipe (14) is controlled by a drive motor (21).

7. The washing device for filter media according to any one of claims 1 to 6, comprising a shut-off valve (22), surrounding the lower part of the air-lift riser pipe (10) inner wall, configured to open in normal operation of the CBS filter and to close when the means (16) for measuring the washed sand flow (31) detects that a clogging occurs in the air-lift riser pipe (10); and a washing water valve (23) that opens in normal operation and closes during clogging.

8. The washing device for filter media according to any one of claims 1 to 7, wherein the shut-off valve (22) is an air operated pinch valve.

9. A Continuous Backwash Sand (CBS) filter, having a sand bed as filter medium (4), **characterized in that** it comprises the washing device for filter media according to any one of claims 1 to 8.

10. A method for cleaning a sand filter of a CBS filter by means of the washing device defined in any one of claims 1 to 8, the method comprising:
- collecting the flow of washed sand (31) that exits the sand washer device (11) before falling on the upper sand bed (4), through the means (16) for measuring the flow rate of the sand washed (31); and
- sending a signal, which is proportional to the flow of sand collected (31), from the means (16) for measuring the flow rate of the sand washed to compressed-air regulating valve (19) located in the compressed air pipe (9); in such a way that whenever the collected flow of sand (31) decreases, the regulating valve (19) opens to allow more compressed air flow to pass through the air-lift riser pipe (10), thus propelling a greater sand flow upwards;
and simultaneously
- measuring the flow of compressed air injected to the air-lift riser pipe (10) through the means (20) for measuring said compressed air; and
- sending a signal to the means (21) for operating the driver for the washing water regulating gate (12) in such a way that whenever the flow of compressed air decreases, the washing water regulating gate (12) rises and reduces the washing water flow.

11. The method according to claim 10, wherein,
when the means (20) for measuring the washed sand flow detects that a clogging occurs in the air-lift riser pipe (10), then the shut-off valve (22) closes and the compressed air regulating valve (19) opens, unclogging the air-lift riser pipe (10); and simultaneously the washing water valve (23) closes to avoid falling the water level; and subsequently
when the washed sand flow detects the unclogging in the air-lift riser pipe (10), the shut-off valve (22) opens again and the air-compressed air valve (19) is regulated for a normal functioning of the washing device.

## Patentansprüche

1. Waschvorrichtung für Filtermedien in CBS-Filtern (Continuous Backwash Sand filters), wobei das Filtermedium (4) ein Sandfilter ist, umfassend:
- einen Druckluftwasserheber (8), der ein Gemisch aus Sand und Wasser mit Verunreinigungen vom unteren Teil zum oberen Teil des Filtermediums (4) nach oben befördert, indem er Druckluft einleitet über
- ein Druckluft-Rohr (9), verbunden mit
- einem Druckluftheber-Steigrohr (10), wobei das Gemisch das Filtermedium (4) und eine Zone (7) für gefiltertes Wasser durchläuft, bis zu
- einer Sandwaschvorrichtung (11), die sich an dem oberen Teil des CBS-Filters befindet, um das Gemisch aufzunehmen und die Verunreinigungen aus dem Sand mit dem Waschwasser auszuwaschen;
- eine Einrichtung (16) zum Messen des Durchflusses des gewaschenen Sandes, die sich an einem Ausgang der Sandwaschvorrichtung (11) und über dem oberen Teil des Filtermediums (4) im Inneren des CBS-Filters befindet, verbunden mit
- einem Regulierventil (19) für die in den Druckluftwasserheber (8) eingeleitete Druckluft, das sich an dem Druckluft-Rohr (9) befindet;
sowie
- eine Einrichtung (20) zum Messen der in das Druckluftheber-Steigrohr (10) eingeleiteten Druckluft, die ein in dem Druckluft-Rohr (9) außerhalb des CBS-Filters angeordneter Druckluft-Durchflussmesser ist, verbunden mit
- einer Einrichtung (21) zum Betätigen eines Antriebs für einen Schieber (12), der den Strom von Waschwasser steuert, das aus dem CBS-Filter über ein Waschwasser-Rohr (14) austritt.

2. Waschvorrichtung für Filtermedien nach Anspruch 1, wobei die Einrichtung (16) zum Messen des Durchflusses von gewaschenem Sand (31) an dem Ausgang der Sandwaschvorrichtung (11) ein Sand-Durchflussmesser (16) des Typs mit Kippgefäßen ist, der enthält:
- zwei verbundene Kippgefäße (25, 26),
- eine Verbindungseinrichtung (28, 29) der Kippgefäße,
- eine Drehwelle (27) zwischen den zwei Gefäßen (25, 26), die deren Kippen ermöglicht,
- einen Kippanschlag (30) zum Beenden jedes Kippvorgangs sowie
- einen Näherungssensor (17) zum Zählen jedes Kippvorgangs.

3. Waschvorrichtung für Filtermedien nach Anspruch 2, wobei die Verbindungseinrichtung der Kippgefäße aus einer mittigen Kammer (28) mit einer Abdeckung (29) besteht, die sich zwischen den zwei verbundenen Kippgefäßen (25, 26) befindet.

4. Waschvorrichtung für Filtermedien nach einem der Ansprüche 2 oder 3, wobei der Näherungssensor (17) ein induktiver Sensor ist.

5. Waschvorrichtung für Filtermedien nach einem der Ansprüche 2 bis 4, wobei sie eine Steuerungseinrichtung (18) zum Empfangen von Signalen von dem Näherungssensor (17) des Sand-Durchflussmessers (16) umfasst, die auf das Regulierventil (19) für die Druckluft einwirkt.

6. Waschvorrichtung für Filtermedien nach einem der Ansprüche 1 bis 5, wobei der Schieber (12), der den Strom von Waschwasser steuert, das aus dem CBS-Filter über eine Waschwasserleitung (14) austritt, von einem Antriebsmotor (21) gesteuert wird.

7. Waschvorrichtung für Filtermedien nach einem der Ansprüche 1 bis 6, umfassend ein Absperrventil (22), das den unteren Teil der Innenwand des Druckluftheber-Steigrohrs (10) umgibt und so ausgeführt ist, dass es im Normalbetrieb des CBS-Filters öffnet und schließt, wenn die Einrichtung (16) zum Messen des Durchflusses von gewaschenem Sand (31) feststellt, dass eine Verstopfung in dem Druckluftheber-Steigrohr (10) auftritt; sowie ein Waschwasser-Ventil (23), das im Normalbetrieb öffnet und bei Verstopfung schließt.

8. Waschvorrichtung für Filtermedien nach einem der Ansprüche 1 bis 7, wobei das Absperrventil (22) ein luftbetätigtes Quetschventil ist.

9. CBS-Filter (Continuous Backwash Sand filter) mit einem Sandbett als Filtermedium (4), **dadurch gekennzeichnet, dass** er die Waschvorrichtung für Filtermedien nach einem der Ansprüche 1 bis 8 umfasst.

10. Verfahren zum Reinigen eines Sandfilters eines CBS-Filters mittels der in einem der Ansprüche 1 bis 8 definierten Waschvorrichtung, wobei das Verfahren umfasst:
- Sammeln des Stroms von gewaschenem Sand (31), der aus der Sandwaschvorrichtung (11) austritt, bevor er auf das obere Sandbett (4) fällt, über die Einrichtung (16) zum Messen des Durchflusses von gewaschenem Sand (31); und
- Senden eines Signals, das proportional zu dem Strom von gesammeltem Sand (31) ist, von der Einrichtung (16) zum Messen des Durchflusses von gewaschenem Sand zu dem Druckluft-Regulierventil (19), das sich in dem Druckluft-Rohr (9) befindet, so dass sich das Regulierventil (19) immer dann öffnet, wenn der gesammelte Sandstrom (31) abnimmt, um einen stärkeren Strom von Druckluft durch das Druckluftheber-Steigrohr (10) strömen zu lassen, wodurch ein stärkerer Sandstrom nach oben befördert wird;
und simultan
- Messen des in das Druckluftheber-Steigrohr (10) eingeleiteten Stroms von Druckluft durch die Einrichtung (20) zum Messen der Druckluft; sowie
- Senden eines Signals zu der Einrichtung (21) zum Betätigen des Antriebs für den Schieber (12) zum Regulieren von Waschwasser so, dass der Schieber (12) zum Regulieren von Waschwasser immer dann ansteigt und den Strom von Waschwasser reduziert, wenn der Strom von Druckluft abnimmt.

11. Verfahren nach Anspruch 10, wobei,
wenn die Einrichtung (20) zum Messen des Durchflusses von gewaschenem Sand feststellt, dass eine Verstopfung in dem Druckluftheber-Steigrohr (10) auftritt, das Absperrventil (22) schließt und das Druckluft-Regulierventil (19) öffnet, wodurch das Druckluftheber-Steigrohr (10) befreit wird; und gleichzeitig das Waschwasserventil (23) schließt, um Abfallen des Wasserpegels zu vermeiden; und anschließend,
wenn der Strom von gewaschenem Sand das Freiwerden des Druckluftheber-Steigrohrs (10) feststellt, das Absperrventil (22) wieder öffnet und das Druckluftventil (19) für einen normalen Betrieb der Waschvorrichtung reguliert wird.

## Revendications

1. Dispositif de lavage pour milieux filtrants dans des filtres à sable de lavage à contre-courant continu (CBS), dans lequel le milieu filtrant (4) est un filtre à sable, comportant :
- une pompe à émulsion d'air (8) qui propulse un mélange de sable et d'eau avec des impuretés vers le haut de bas en haut du milieu filtrant (4), en injectant de l'air comprimé à partir
- d'un tuyau d'air comprimé (9) qui est raccordé à
- un tuyau montant à émulsion d'air (10), le mélange croisant le milieu filtrant (4) et une zone d'eau filtrée (7), jusqu'à
- un dispositif laveur de sable (11) qui est situé sur la partie supérieure du filtre CBS pour recevoir le mélange et laver les impuretés du sable avec l'eau de lavage,
- des moyens (16) pour mesurer le débit du sable lavé, situés au niveau d'une sortie du dispositif laveur de sable (11) et au-dessus de la partie supérieure du milieu filtrant (4) à l'intérieur du filtre CBS, étant raccordés à
- une soupape de régulation (19) de l'air comprimé injecté dans la pompe à émulsion d'air (8), située sur le tuyau d'air comprimé (9),
et
- des moyens (20) pour mesurer l'air comprimé injecté dans le tuyau montant à émulsion d'air (10), qui sont un débitmètre d'air comprimé situé dans le tuyau d'air comprimé (9) à l'extérieur du filtre CBS, raccordés à
- des moyens (21) pour faire fonctionner un entraînement pour une vanne (12) qui commande l'écoulement d'eau de lavage qui sort du filtre CBS à travers un tuyau d'eau de lavage (14).

2. Dispositif de lavage pour milieux filtrants selon la revendication 1, dans lequel les moyens (16) pour mesurer l'écoulement du sable lavé (31) à la sortie du dispositif laveur de sable (11) sont un mesureur d'écoulement de sable (16) du type à godets basculants contenant :
- deux godets basculants assemblés (25, 26),
- des moyens reliés au godets basculants (28, 29),
- un axe de pivotement (27) entre les deux godets (25, 26) pour leur permettre de basculer,
- une butée de basculement (30) pour mettre fin à chaque basculement, et
- un capteur de proximité (17) pour compter chaque basculement.

3. Dispositif de lavage pour milieux filtrants selon la revendication 2, dans lequel les moyens reliés au godets basculants sont constitués d'un compartiment central (28) ayant un capot (29), positionné entre les deux godets basculants assemblés (25, 26).

4. Dispositif de lavage pour milieux filtrants selon l'une quelconque des revendications 2 ou 3, dans lequel le capteur de proximité (17) est un capteur inductif.

5. Dispositif de lavage pour milieux filtrants selon l'une quelconque des revendications 2 à 4, dans lequel il comporte une commande (18) pour recevoir des signaux provenant du capteur de proximité (17) du débitmètre de sable (16), qui agit sur la soupape de régulation (19) pour l'air comprimé.

6. Dispositif de lavage pour milieux filtrants selon l'une quelconque des revendications 1 à 5, dans lequel la vanne (12) qui commande l'écoulement d'eau de lavage qui sort du filtre CBS à travers un tuyau d'eau de lavage (14) est commandée par un moteur d'entraînement (21).

7. Dispositif de lavage pour milieux filtrants selon l'une quelconque des revendications 1 à 6, comportant une vanne d'arrêt (22), entourant la partie inférieure de la paroi intérieure du tuyau montant à émulsion d'air (10), configurée pour s'ouvrir lors du fonctionnement normal du filtre CBS et pour se fermer lorsque les moyens (16) pour mesurer l'écoulement de sable lavé (31) détectent qu'un colmatage se produit dans le tuyau montant à émulsion d'air (10), et une vanne d'eau de lavage (23) qui s'ouvre en fonctionnement normal et se ferme pendant un colmatage.

8. Dispositif de lavage pour milieux filtrants selon l'une quelconque des revendications 1 à 7, dans lequel la vanne d'arrêt (17) est une vanne à manchon pneumatique.

9. Filtre à sable de lavage à contre-courant continu (CBS), ayant un lit de sable en tant que milieu filtrant (4), **caractérisé en ce qu'**il comporte le dispositif de lavage pour milieux filtrants selon l'une quelconque des revendications 1 à 8.

10. Procédé pour nettoyer un filtre à sable d'un filtre CBS au moyen du dispositif de lavage défini dans l'une quelconque des revendications 1 à 8, le procédé comportant de :
- collecter l'écoulement de sable lavé (31) qui sort du dispositif laveur de sable (11) avant de tomber sur le lit de sable supérieur (4), par les moyens (16) pour mesurer le débit du sable lavé (31), et
- envoyer un signal, qui est proportionnel à l'écoulement de sable collecté (31), à partir des moyens (16) pour mesurer le débit du sable lavé, à la soupape de régulation d'air comprimé (19) située dans le tuyau d'air comprimé (9), d'une manière telle que chaque fois que l'écoulement de sable (31) collecté diminue, la soupape de régulation (19) s'ouvre pour permettre le passage d'un écoulement d'air plus comprimé à travers le tuyau montant à émulsion d'air (10), en propulsant ainsi un plus grand écoulement de sable vers le haut,
et simultanément
- mesurer l'écoulement d'air comprimé injecté dans le tuyau montant à émulsion d'air (10) par les moyens (20) pour mesurer ledit air comprimé, et
- envoyer un signal aux moyens (21) pour faire fonctionner l'entraînement pour la vanne de régulation d'eau de lavage (12) d'une manière telle que chaque fois que l'écoulement d'air comprimé diminue, la vanne de régulation d'eau de lavage (12) monte et réduit l'écoulement d'eau de lavage.

11. Procédé selon la revendication 10, dans lequel
lorsque les moyens (20) pour mesurer l'écoulement de sable lavé détectent qu'un colmatage se produit dans le tuyau montant à émulsion d'air (10), la vanne d'arrêt (22) se ferme et la soupape de régulation d'air comprimé (19) s'ouvre, en décolmatant le tuyau montant à émulsion d'air (10), et la vanne d'eau de lavage (23) se ferme simultanément pour éviter une chute du niveau d'eau, et ensuite
lorsque l'écoulement de sable lavé détecte le décolmatage dans le tuyau montant à émulsion d'air (10), la vanne d'arrêt (22) s'ouvre de nouveau et la vanne d'air comprimé (19) est régulée pour un fonctionnement normal du dispositif de lavage.
